# EUROPÄISCHE PATENTSCHRIFT

(11) **EP 3 147 086 B1**
(45) Veröffentlichungstag und Bekanntmachung des Hinweises auf die Patenterteilung: **04.11.2020**
(21) Anmeldenummer: 15186310.7
(22) Anmeldetag: 22.09.2015
(51) Int. Cl.: G06T 7/70, B25J 9/16

(54) **AUTOMATISIEREN VON ROBOTEROPERATIONEN IM FLUGZEUGBAU**
AUTOMATION OF ROBOT OPERATIONS IN AIRCRAFT CONSTRUCTION
AUTOMATISATION D'OPERATIONS DE ROBOT DANS LA CONSTRUCTION AÉRONAUTIQUE

(43) Veröffentlichungstag der Anmeldung: 29.03.2017
(73) Patentinhaber: Airbus Defence and Space GmbH, 85521 Ottobrunn (DE)
(72) Erfinder: Meyer, Dr. Meinhard, 85521 Ottobrunn (DE); Christian, Herrles, 85521 Ottobrunn (DE); Jens, Fuhrmann, 85521 Ottobrunn (DE)

(56) Entgegenhaltungen:
- WO-A1-2015/121767
- DE-A1-102014 011 852
- JP-A- H1 185 235
- JP-A- H03 280 106
- US-A- 4 639 878
- US-A- 6 044 308
- US-A1- 2012 072 021
- US-A1- 2014 378 999
- US-A1- 2015 100 066

## Beschreibung

Die vorliegende Erfindung betrifft ein Verfahren zur Steuerung einer Operation eines Roboters, ein oder mehrere computerlesbare Speichermedien mit darauf gespeicherten entsprechenden Instruktionen sowie eine Anlage zum automatischen Durchführen von Operationen durch einen umfassten Roboter.

Bei der Herstellung und Wartung von Bauteilen und Komponenten werden bekanntermaßen verschiedenste Operationen mittels Robotern durchgeführt. Sofern die entsprechenden zu bearbeitenden Teile nicht zu groß sind, insbesondere einen Durchmesser nicht größer als etwa 2 m haben, können die jeweiligen Operationsbereiche, an denen eine oder mehrere Operation(en) durchgeführt werden soll(en), von Robotern mit deren Werkzeugelementen nach dem Stand der Technik hochgenau angefahren und bearbeitet werden. So können beispielsweise Oberflächenbehandlungen (z.B. Reinigungen, Grundierungen, Abdichtungen und/oder Lackierungen) vorgenommen, Verbindungen zwischen mehreren Einzelelementen hergestellt, Löcher gebohrt, Ritzen gefräst, elektronische Kontakte gelötet oder Fugen verdichtet werden, um nur einige der zahlreichen Möglichkeiten zu nennen.. Beispiele für das Automatisieren von Roboteroperationen sind z.B aus den Druckschriften DE 10 2014 011 852 A1, US 4 639 878 A, US 2012/072021 A1, US 2015/100066 A1 und US 2014/378999 A1 bereits bekannt.

Sofern verschiedene Bauteilvarianten bearbeitet bzw. behandelt werden sollen, müssen diese gemäß der herkömmlichen Vorgehensweise stets neu eingemessen werden, was einen hohen Aufwand bedeutet. Zudem wird die herkömmliche automatische Ansteuerung mit zunehmender Größe der zu bearbeitenden Teile schwieriger. Beispielsweise in der Luftfahrt, der Architektur oder dem Schiffbau, wenn die Bauteile meist einen Durchmesser von mehr als 2 m haben, werden eingesetzte Roboter oder Anlagen oder auch deren Werkzeugelemente im Allgemeinen zunächst von einem oder mehreren Arbeitern (manuell) und/oder mittels automatisierter Innenraum-Ortung (z.B. per sogenanntem "Indoor-GPS") an eine ungefähre Position relativ zu einem zu bearbeitenden Bauteil gebracht, ehe sie anhand von fixen Referenzpunkten im Raum in einem zeitintensiven und aufwendigen Verfahren genau eingemessen werden, um die beabsichtigte Operation durchführen zu können. Dabei treten gleichwohl oft Ungenauigkeiten auf, deren Konsequenzen wiederum mit zusätzlichem Aufwand vermieden und/oder beseitigt werden müssen. Umfasst die Operation beispielsweise ein sehr ortsgenaues Aufbringen von Material und/oder Hilfsstoffen (z.B. ein Füllen einer Nut mit Füllmaterial, ein Abdecken von Nieten und/oder ein Versiegeln von Kanten), so werden die entsprechenden Aufbringungsränder im Allgemeinen vor der Operation abgeklebt, um aus einer unpräzisen Positionierung einer Materialdüse und/oder einer (lokal) unpassenden Materialmenge resultierende Verschmutzungen am Bauteil zu verhindern; überschüssiges Material wird nach einem Füllvorgang abgezogen. Das entsprechende Abklebematerial muss nach dem Prozess wieder entfernt werden. Oft genug sind die Materialeigenschaften (z.B. Viskosität, Aushärtung und/oder Topfzeit) nur unzulänglich einer Automatisierung bzw. unterschiedlichen Bearbeitungsgeschwindigkeiten der Automatisierung anpassbar, und es kann der Roboter nicht genau genug an die lokalen Stellen der großen Bauteile geführt werden. Schließlich kann die Qualität einer lokalen Anwendung bei großen Bauteilen mit herkömmlich verwendeten Mitteln nicht in Echtzeit bewertet werden.

Die vorliegende Erfindung hat die Aufgabe, eine Technik bereitzustellen, mit der die vorgenannten Nachteile vermieden werden und ein präzises automatisches Durchführen von Roboteroperationen möglich ist.

Die Aufgabe wird gelöst durch ein Verfahren gemäß Anspruch 1, ein oder mehrere computerlesbare Speichermedien gemäß Anspruch 12 und eine Anlage gemäß Anspruch 13. Bevorzugte Ausführungsformen sind in den Unteransprüchen offenbart.

Ein erfindungsgemäßes Verfahren dient einer Steuerung einer Roboteroperation im Flugzeugbau. Es umfasst ein Erstellen mindestens eines virtuellen Bildes (das zur Abgrenzung von anderen im weiteren genannten virtuellen Bildern in dieser Schrift ggf. auch als "virtuelles Bild zur Operationsdurchführung" bezeichnet wird) mit einem optischen 3D-Messsystem und in Bezug auf ein Koordinatensystem des optischen 3D-Messsystems; dieses Koordinatensystem wird im Folgenden auch als "3D-Messkoordinatensystem" bezeichnet. Das mindestens eine virtuelle Bild erfasst dabei einen Oberflächenbereich eines Flugzeugbauteils (enthält also Bilddaten von dem Oberflächenbereich). Der Oberflächenbereich ist dabei vorzugsweise ein Bereich, an dem eine Operation durchzuführen ist; er kann auch nur ein Teil eines solchen Bereichs sein, d.h. eine Operation kann über den erfassten Oberflächenbereich hinaus erforderlich bzw. vorgesehen sein.

Das erfindungsgemäßes Verfahren umfasst weiterhin ein Umrechnen einer Mehrzahl von Punktkoordinaten des virtuellen Bildes (die also in Punktkoordinaten des 3D-Messkoordinatensystems vorliegen) in ein Roboterkoordinatensystems mit Hilfe einer Transformationsvorschrift und ein Steuern eines Werkzeugelements des Roboters anhand der umgerechneten Punktkoordinaten bezüglich des Roboterkoordinatensystems zum Durchführen einer (vorgesehenen) Operation; wobei die Mehrzahl von Punktkoordinaten des mindestens einen virtuellen Bildes mindestens einen Abschnitt einer Operationsbahn definiert, entlang welcher die Operation durch das Werkzeugelement vorgesehen ist.

Optische 3D-Messsysteme sind aus dem Stand der Technik bekannt. Sie umfassen im Allgemeinen mindestens eine Kamera und eine Rechner- und Steuerungseinheit, die dazu eingerichtet ist, mittels der Kamera erfasste dreidimensionale Daten zu verarbeiten, insbesondere daraus ein oder mehrere virtuelle Bilder zu erstellen. Ein derartiges virtuelles Bild umfasst dabei eine Datenstruktur mit einer Mehrzahl von Punkten in 3D-Messkoordinaten; vorzugsweise ist das virtuelle Bild an einem Bildschirm als Abbild (realitätsnah) darstellbar. In der industriellen Fertigung werden optische 3D-Messsysteme herkömmlich zur automatischen Qualitätskontrolle eingesetzt, insbesondere zum Ausführen eines Soll-Ist-Vergleichs bei hergestellten Bauteilen und damit zur Unterscheidung von weiter zu verwendenden Teilen gegenüber Ausschussware.

Das virtuelle Bild wird vorzugsweise in einem Datenspeicher, z.B. des optischen 3D-Messsystems gespeichert.

Das Erstellen eines virtuellen Bildes umfasst vorzugsweise ein Erfassen einer Mehrzahl von Einzelbildern mit mindestens einer Kamera des optischen 3D-Messsystems, die überlagert werden. Vorzugsweise weist das Bauteil dabei eine Mehrzahl an Bauteil-Orientierungspunkten auf, die vom virtuellen Bild erfasst werden. Derartige Bauteil - Orientierungspunkte (die aufgebrachte Markierungen oder dem Bauteil immanent sein können (wie z.B. Ecken oder Kanten)) können einer korrekten und der Realität entsprechenden Überlagerung der Einzelbilder dienen.

Gemäß einer Ausführungsform kann das Verfahren ein Ergänzen des virtuellen Bildes mit Hilfe mindestens eines zusätzlich vom optischen 3D-Messsystem erstellten virtuellen Bildes und/oder mit Hilfe eingelesener Daten (beispielsweise Konstruktionsdaten bzw. CAD-Daten des Bauteils) umfassen; die Mehrzahl von Punktkoordinaten, die verfahrensgemäß in Punktkoordinaten des Robotersystems umgerechnet werden, können in diesem Falle Punktkoordinaten des ergänzten virtuellen Bildes sein. Auf diese Weise kann der Roboter auch in Bereichen geeignet gesteuert werden und die vorgesehene Operation durchführen, die nicht im (ursprünglichen) virtuelle Bild erfasst wurden.

Die Mehrzahl an Punktkoordinaten des virtuellen Bildes definiert mindestens einen Abschnitt einer Operationsbahn (Trajektorie), entlang der die Operation durch das Werkzeugelement vorgesehen ist. In einem speziellen Beispiel, bei dem die vorgesehene Operation die Füllung einer Nut mit Füllmaterial umfasst, kann die Mehrzahl an Punktkoordinaten insbesondere mindestens einen Abschnitt der Nutoberfläche bestimmen. Das Steuern des Werkzeugelements kann eine Datenaufbereitung (z.B. der transformierten bzw. umgerechneten Punktkoordinaten im Roboterkoordinatensystem) in eine von einer Robotersteuerung verwendbare Form umfassen; diese Datenaufbereitung kann von einer Rechnereinheit des optischen 3D-Messsystems, einer Rechnereinheit des Roboters und/oder einer externen Rechnereinheit durchgeführt werden.

Die Koordinatensysteme von optischem 3D-Messsystem und/oder Roboter können beispielsweise jeweils systemimmanent gegeben und/oder durch einen Anwender wählbar sein und/oder (im Falle des optischen 3D-Messsystems) an einem oder mehreren erfasste(n) Elemente(n) wie beispielsweise einem Bauteil ausgerichtet werden. Eine Robotersteuerung ist vorzugsweise dazu eingerichtet, mit dem mindestens einen Werkzeugelement jeweils auf Grundlage von Roboterkoordinaten bestimmte Positionen anzusteuern, das Werkzeugelement (bzw. einen vorgegebenen Referenzpunkt am Werkzeugpunkt wie beispielsweise eine Werkzeugspitze) also an den Positionen jeweils anzuordnen.

Die vorliegende Erfindung ermöglicht eine präzise Steuerung bzw. Positionierung des Werkzeugelements entsprechend durch das optische 3D-Messsystem erfassten Gegebenheiten: Das 3D-Messsystem kann somit gewissermaßen als Auge des Roboters fungieren. Mittels der Transformationsvorschrift werden das 3D-Messkoordinatensystem und das Roboterkoordinatensystem kalibriert. Damit können optisches 3D-Messsystem und Roboter insbesondere auch an das Bauteil bewegt werden und muss das System nicht ausgerichtet werden, weil die Relation von Bauteil und Werkzeugelement relativ zueinander zugrunde gelegt wird.
Mittels der Transformationsvorschrift werden nämlich das Roboterkoordinatensystem und das 3D-Messkoordinatensystem relativ zueinander ausgerichtet, unabhängig von sonstigen äußeren Bedingungen. Auch nach dem Kalibrieren ist keine Beibehaltung einer speziellen Position oder eine Ausrichtung eines zu bearbeitenden Bauteils erforderlich, weil das System sich an Orientierungspunkten an Bauteil und Roboter (bzw. dessen Werkzeugelement) orientieren kann.
Die vorliegende Erfindung ermöglicht insbesondere ein präzises automatisches Durchführen von Roboteroperationen, bei denen auf ein anfängliches oder ständiges Hinführen des Roboters zu einer ungefähren Bearbeitungsposition (manuell oder mit sogenanntem "indoor GPS"), die dort hernach immer wieder exakt präzisiert werden muss, verzichtet werden kann.

Das Steuern des Werkzeugelements kann eine Positionierung des mindestens einen Werkzeugelements und/oder eine an der Position auszuführenden Operation betreffen:
Gemäß einer vorteilhaften Ausführungsform umfasst ein erfindungsgemäßes Verfahren ein Bestimmen von Durchführungsparametern für die Operation anhand der Mehrzahl von Punktkoordinaten im 3D-Messkoordinatensystem und/oder im Roboterkoordinatensystem. Derartige Durchführungsparameter können beispielsweise eine Einstellung einer Operationsgeschwindigkeit (z.B. einer Drehzahl eines rotierenden Werkzeugelements), einer Verweildauer des Werkzeugelements an der jeweiligen Position (z.B. eine Dauer eines Bohrvorgangs), eine lokal an einer Position benötigte Ausspritzmenge an Material (z.B. Füll- oder Klebematerial), einen lokal geeigneten Spritzdruck einer Düse des Werkzeugelements oder Ähnliches bestimmen.

Gemäß einem speziellen Beispiel kann das mindestens eine vom optischen 3D-Messsystem erstellte virtuelle Bild hochgenau Abmessungen einer mit Füllmaterial zu füllenden Nut erfassen, insbesondere auch lokale Unregelmäßigkeiten der Nut, an denen z.B. mehr oder weniger Füllmaterial einzubringen ist (weil z.B. die Nut an einer Stelle tiefer oder weniger tief bzw. breiter oder schmaler ist als an anderen Stellen) oder an denen das Werkzeugelement eine Bewegungsrichtung ändern und/oder eine zusätzliche Bewegung durchführen muss. Daraus können die entsprechenden Durchführungsparameter bestimmt und das Werkzeugelement geeignet gesteuert werden.

Gemäß einer vorteilhaften Ausführungsform eines erfindungsgemäßen Verfahrens wird das Durchführen der Operation durch Erstellen mindestens eines zusätzlichen virtuellen Bildes mit dem optischen 3D-Messsystem überwacht und/oder geregelt. Vorzugsweise erfolgt das Erstellen des mindestens einen zusätzlichen virtuellen Bildes und/oder dessen Übertragung an den Roboter (im Wesentlichen) in Echtzeit. Damit kann insbesondere ein Resultat eines dem Erstellen des zusätzlichen virtuellen Bildes vorangegangenen Schrittes der Operation erfasst werden. Mindestens ein nachfolgender Schritt der Operation kann dann unter Berücksichtigung dieses Resultats gesteuert bzw. geregelt werden. Somit werden eine Qualitätskontrolle und eine Fehlerminimierung ermöglicht.

Ein erfindungsgemäßes Verfahren (in den verschiedenen möglichen Ausführungsformen) kann vorzugsweise mindestens teilweise automatisch auf einer Anlage ausgeführt werden, die mindestens eine Rechnereinheit, einen Roboter und ein damit in Kommunikationsverbindung stehendes optisches 3D-Messsystem umfasst; vorzugsweise stehen Rechnereinheit, Roboter und optisches 3D-Messsystem in (z.B. drahtloser oder verdrahteter oder auch auf Umpositionierung mindestens eines Speichermediums basierender) Kommunikationsverbindung und/oder ist die Rechnereinheit zumindest teilweise in den Roboter und/oder das optische 3D-Messsystem integriert. Die zugehörigen Instruktionen zum Ausführen eines erfindungsgemäßen Verfahrens können auf einem oder mehreren computerlesbaren Speichermedium bzw. Speichermedien gespeichert werden.

Demgemäß enthält ein erfindungsgemäßes Speichermedium oder enthält eine erfindungsgemäße Mehrzahl an Speichermedien derartige (als Datenstrukturen abgelegte) Instruktionen.

Ein erfindungsgemäßes Verfahren kann beispielsweise von einer Rechnereinheit ausgeführt werden, die mit dem Roboter und dem optischen 3D-Messsystem in (z.B. drahtloser oder verdrahteter) Kommunikationsverbindung steht und/oder zumindest teilweise in den Roboter und/oder das optische 3D-Messsystem integriert ist. Eine erfindungsgemäße Anlage kann analog eine derartige Rechnereinheit umfassen.

Die Transformationsvorschrift kann auf einem (oder dem) Speichermedium abgelegt und einem oder mehreren Komponenten einer derartigen Anlage zugänglich sein, oder sie kann in einer der Komponenten gespeichert sein.

Gemäß einer vorteilhaften Ausführungsform umfasst ein erfindungsgemäßes Verfahren ein Bestimmen der Transformationsvorschrift. Eine derartige Ausführungsform kann insbesondere ein Bestimmen von Positionskoordinaten einer Mehrzahl an Raumpunkten bezüglich des 3D-Messkoordinatensystems und ein Bestimmen einer Abbildungsvorschrift, mit der die Positionskoordinaten bezüglich des 3D-Messkoordinatensystems auf Positionskoordinaten der Raumpunkte bezüglich des Roboterkoordinatensystems abgebildet werden; diese Abbildungsvorschrift ist dann die genannte Transformationsvorschrift.

Das Bestimmen von Positionskoordinaten der Mehrzahl an Raumpunkten bezüglich des 3D-Messkoordinatensystems erfolgt vorzugsweise auf Grundlage des mindestens einen virtuellen Bildes und/oder mindestens eines weiteren virtuellen Bildes, z.B. durch Herauslesen der Positionskoordinaten aus einer entsprechenden Datenstruktur des jeweiligen virtuellen Bildes.

Die Positionskoordinaten der vorzugsweise am Roboter (z.B. an seiner Oberfläche) angeordneten Raumpunkte bezüglich des Roboterkoordinatensystems können aus einem Datenspeicher herausgelesen werden; eine erfindungsgemäße Anlage kann entsprechend dazu eingerichtet sein, die Positionskoordinaten aus einem Datenspeicher (den die Anlage umfassen kann oder der als externes Speichermedium herangezogen werden kann) herauszulesen. Insbesondere können die genannten Positionskoordinaten in einem früheren Verfahren bestimmt worden und/oder zumindest zum Teil als System- bzw. Maschinendaten des Roboters vorgegeben sein, beispielsweise wenn die Raumpunkte einen oder mehrere feste Punkte (z.B. Markierungen oder Ecken) an einem Robotersockel oder an einem sonstigen (vorzugsweise während der Operationen des Roboters unbeweglichen) Teil des Roboters umfasst. Alternativ oder zusätzlich können für mindestens einen Teil der Mehrzahl die Positionskoordinaten bezüglich des Roboterkoordinatensystems ausgewählt und mit einem beweglichen Roboterelement, beispielsweise mit dem Werkzeugelement angesteuert werden:
Gemäß einer vorteilhaften Ausführungsform umfasst ein erfindungsgemäßes Verfahren ein Festlegen (z.B. ein Auswählen) der Positionskoordinaten bezüglich des Roboterkoordinatensystems für mindestens einen der Raumpunkte, ein Positionieren (mindestens) eines Referenzpunktes eines (relativ zu einem Roboterrumpf) beweglichen Roboterelements (z.B. eines Roboterarms, insbesondere des Werkzeugelements des Roboters) an dem mindestens einen Raumpunkt und ein Erstellen eines weiteren virtuellen Bildes (das hier auch als ein virtuelles Bild zur Kalibrierung (der Koordinatensysteme) bezeichnet wird) mit dem optischen 3D-Messsystem. Das weitere virtuelle Bild erfasst dabei das Bauteil und den an dem mindestens einen Raumpunkt positionierten Referenzpunkt bezüglich des 3D-Messkoordinatensystems.

Gemäß einer Ausführungsform eines erfindungsgemäßen Verfahrens werden für alle Raumpunkte der Mehrzahl die Positionskoordinaten bezüglich des 3D-Messkoordinatensystems bestimmt: Die Positionskoordinaten bezüglich des Roboterkoordinatensystems werden jeweils ausgewählt und mit dem Referenzpunkt angefahren, der dort jeweils (vorzugsweise mit mindestens ein Teil des Bauteils) vom optischen 3D-Messsystem in einem virtuellen Bild erfasst wird. Damit werden die entsprechenden Positionskoordinaten bezüglich des 3D-Messkoordinatensystems bestimmt.

Der Referenzpunkt ist dabei vorzugsweise ein in Bezug auf das bewegliche Roboterelement (das insbesondere das Werkzeugelement sein kann) vorab festgelegter Punkt, z.B. ein Punkt am beweglichen Roboterelement und/oder ein daraus zu errechnender Punkt (der in einer festgelegten geometrischen Beziehung zum Roboterelement steht), beispielsweise eine Spitze des beweglichen Roboterelements und/oder ein zentraler Punkt an einer Düse des Roboterelements (z.B. an einem Düsenaustritt). Die Positionskoordinaten bezüglich des optischen 3D-Messsystems ergeben sich vorzugsweise aus dem (ggf. weiteren) virtuellen Bild, werden z.B. aus ihm (bzw. der entsprechenden Datenstruktur) herausgelesen.

Auf diese Weise können die Positionskoordinaten bezüglich des 3D-Messsystems für geeignete Raumpunkte bestimmt werden, auch wenn keine derartigen Daten im Vorhinein (z.B. aus einem Datenspeicher) bekannt sind. Bei geeigneter Wahl der Positionskoordinaten bezüglich des Roboterkoordinatensystems kann zudem ein Rechenaufwand für die Bestimmung der Transformationsvorschrift reduziert werden.

Gemäß einem bevorzugten Beispiel umfasst die Mehrzahl an Raumpunkten vier Raumpunkte, von denen drei eine Ebene aufspannen, in der der vierte Raumpunkt nicht liegt.

Vorteilhaft ist eine Ausführungsvariante eines erfindungsgemäßen Verfahrens, die zudem ein Einmessen des am beweglichen Roboterelement (z.B. am Werkzeugelement) befindlichen Referenzpunktes umfasst. Auf diese Weise kann der Referenzpunkt geeignet am beweglichen Roboterelement festgelegt werden, insbesondere an einer austauschbaren Komponente des Werkzeugelements wie beispielsweise einer Düse oder einem Bohreinsatz. So können die Roboterkoordinaten des Referenzpunktes (z.B. aus Roboterkoordinaten einer oder mehrerer Komponenten, die unveränderlich am bzw. relativ zum Werkzeugelement sind) an jeder Position bestimmt werden (also auch bei einer Bewegung des Werkzeugelements), und umgekehrt kann der Referenzpunkt mittels einer Robotersteuerung, der das Roboterkoordinatensystem zugrunde liegt, an durch Roboterkoordinaten gegebene Positionen geführt werden.

Gemäß einer vorteilhaften Ausführungsvariante eines erfindungsgemäßen Verfahrens erfasst das mindestens eine virtuelle Bild (zur Operationsdurchführung) (das in dieser Ausführungsform ein erstes virtuelles Bild (zur Operationsdurchführung) ist) das Werkzeugelement in einer gegebenen Stellung sowie mit einer Mehrzahl an am Werkzeugelement angeordneten Orientierungspunkten; die "gegebene Stellung" ist dabei eine Position und Ausrichtung, in der sich das Werkzeugelement bei Erstellen des mindestens einen virtuellen Bildes (zur Operationsdurchführung) befindet. Die Orientierungspunkte können beispielsweise Punkte an mindestens eine Ecke und/oder Kante des Werkzeugelements sein und/oder durch eine aufgebrachte Markierung wie beispielsweise mindestens einen aufgeklebten oder aufgemalten Punkt oder durch mindestens eine aufgeklebte oder aufgemalte Linie oder geometrischen Form gegeben sein.

Ein Verfahren dieser Ausführungsform umfasst ferner ein Umpositionieren des Bauteils (das ein Ändern einer Ausrichtung und/oder einer Position des Bauteils umfassen kann) und/oder ein Platzieren eines anderen Bauteils (das in einer beliebig gewählten Ausrichtung erfolgen kann) in einem Erfassungsbereich des optischen 3D-Messsystems (unter Berücksichtigung einer Verfahrbarkeit des optischen 3D-Messsystems; der Erfassungsbereich kann also auch Punkte umfassen, die ggf. erst durch ein Umpositionieren des optischen 3D-Messsystems erfasst werden können) und ein Erstellen eines weiteren virtuellen Bildes (zur Operationsdurchführung) in Bezug auf das 3D-Messkoordinatensystem. Das weitere virtuelle Bild erfasst dabei einen Oberflächenbereich des umpositionierten oder anderen Bauteils und die Mehrzahl an Orientierungspunkten am in der gegebenen Stellung befindlichen Werkzeugelement mit dem 3D-Messsystem. Insbesondere ist also das Werkzeugelement beim Erfassen des ersten und des weiteren virtuellen Bildes jeweils in derselben Stellung (in der es bis zum Erstellen des weiteren virtuellen Bildes verblieben sein kann oder in die es erneut gebracht worden sein kann).

Trotz der Änderung bezüglich des Bauteils bleibt in dieser Ausführungsform die Transformationsvorschrift gültig, sie bildet also weiterhin Punktkoordinaten bezüglich des 3D-Messsystems auf die passenden Punktkoordinaten bezüglich des Roboterkoordinatensystems ab, weil sich das 3D-Messsystem an den Orientierungspunkten am fixen Werkzeugelement orientieren und sein Koordinatensystem entsprechend ausrichten kann. Ein abermaliges Bestimmen einer Transformationsvorschrift kann somit entfallen.

Ein derartiges Verfahren kann weiterhin ein Umrechnen einer Mehrzahl von Punktkoordinaten (bzgl. des 3D-Messkoordinatensystems) des weiteren virtuellen Bildes mittels der Transformationsvorschrift in Punktkoordinaten bezüglich des Roboterkoordinatensystems sowie ein Steuern des Roboters anhand dieser umgerechneten Punktkoordinaten bezüglich des Roboterkoordinatensystems zum Durchführen einer weiteren Operation umfassen. Auch am umpositionierten oder anderen Bauteil kann somit eine geeignete Operation auf die genannte vorteilhafte (insbesondere präzise) Weise durchgeführt werden.

Analoges gilt bei einer Umpositionierung des Roboters, wenn das Bauteil fest bleibt: Gemäß einer vorteilhaften Ausführungsform eines erfindungsgemäßen Verfahrens erfasst das mindestens eine virtuelle Bild (zur Operationsdurchführung) das Bauteil in einer gegebenen Bauteilstellung sowie das Werkzeugelement mit einer Mehrzahl an daran angeordneten Orientierungspunkten; das Bauteil weist dabei vorzugsweise eine Mehrzahl an Bauteil-Orientierungspunkten auf. Derartige Bauteil-Orientierungspunkte und/oder die Orientierungspunkte am Werkzeugelement können beispielsweise Punkte an mindestens einer Ecke und/oder Kante des jeweiligen Elements sein und/oder durch eine aufgebrachte Markierung wie beispielsweise mindestens einen aufgeklebten oder aufgemalten Punkt oder durch mindestens eine aufgeklebte oder aufgemalte Linie oder geometrischen Form gegeben sein. Die "gegebene Bauteilstellung" umfasst eine Position und Ausrichtung des Bauteils.

Ein derartiges Verfahren umfasst weiterhin ein Umpositionieren des Roboters und ein Erstellen eines weiteren virtuellen Bildes mit dem optischen 3D-Messystem (und in Bezug auf dessen 3D-Messkoordinatensystem), das mindestens den Oberflächenbereich und/oder einen weiteren Oberflächenbereich des in der ersten Stellung befindlichen Bauteils sowie die Mehrzahl an am Werkzeugelement des umpositionierten Roboters angeordneten Orientierungspunkten umfasst.

Ein solches Verfahren kann dann weiterhin ein Umrechnen einer Mehrzahl von Punktkoordinaten des weiteren virtuellen Bildes (also bzgl. des 3D-Messkoordinatensystems) in Punktkoordinaten bezüglich des Roboterkoordinatensystems mit Hilfe der Transformationsvorschrift umfassen sowie ein Steuern des Roboters anhand der Punktkoordinaten des Roboterkoordinatensystems zum Durchführen einer weiteren Operation.

Das Bauteil hat vorzugsweise einen Durchmesser von 2 m oder mehr; als "Durchmesser" wird in dieser Schrift der maximal mögliche Abstand zweier auf dem Bauteil befindlicher Punkte verstanden. Gemäß des erfindungsgemäßen Verfahrens ist das Bauteil ein Element aus dem Flugzeugbau, beispielsweise ein Verschalungselement von Rumpf oder Flügel.

Im Folgenden werden Merkmale eines bevorzugten Ausführungsbeispiels der Erfindung anhand zweier Zeichnungen näher erläutert.

Es zeigen schematisch:
- Figur 1:: eine Anlage zum automatischen Durchführen von Operationen gemäß einer exemplarischen Ausführungsform der vorliegenden Erfindung
- Figur 2:: die Anlage gemäß Figur 1 in einer anderen Situation.

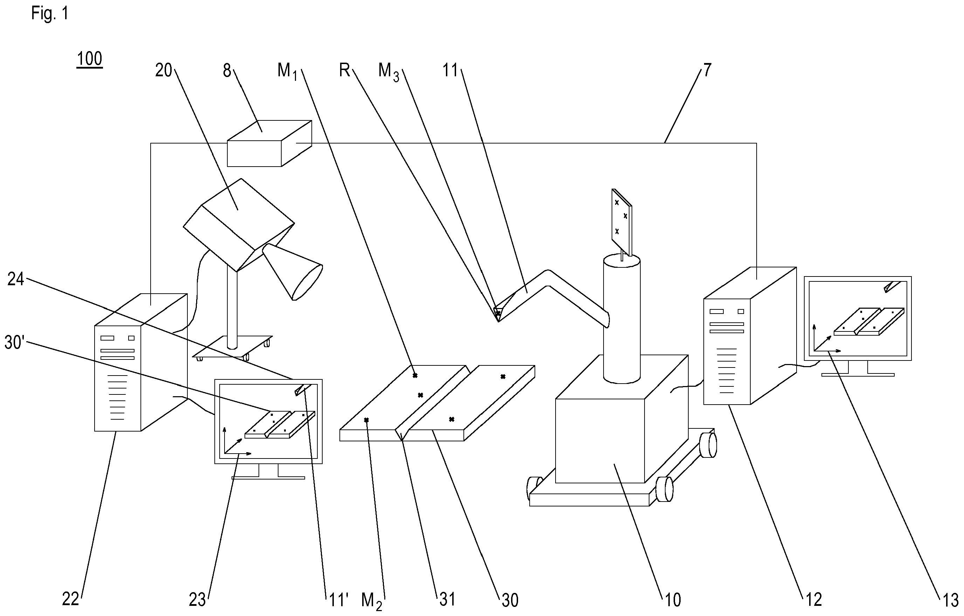

In Figur 1 ist eine exemplarische Ausführungsform einer erfindungsgemäßen Anlage 100 dargestellt, die insbesondere dazu eingerichtet ist, ein erfindungsgemäßes Verfahren auszuführen.

Die Anlage 100 umfasst einen Roboter 10 mit einem mittels einer Robotersteuerung beweglichen Werkzeugelement 11. Die Robotersteuerung ist dabei in eine Rechnereinheit 12 (einen Computer) integriert, und ihr liegt ein Roboterkoordinatensystem 13 zugrunde, das in der Figur 1 schematisch in einem Bildschirm der Rechnereinheit dargestellt ist.

Die Anlage 100 umfasst ferner ein optisches 3D-Messsystem 20, das seinerseits eine Rechnereinheit 22 umfasst, über die insbesondere Operationen des optischen 3D-Messsystems gesteuert werden können. Dem optischen 3D-Messsystem 20 bzw. seiner Rechnereinheit 22 liegt ein 3D-Messkoordinatensystem 23 zugrunde, das in der Figur 1 schematisch an einem mit der Rechnereinheit verbundenen Bildschirm 24 dargestellt ist.

Die Rechnereinheiten 12 und 22 sind im gezeigten Beispiel über eine Kommunikationsverbindung 7 und über eine Aufbereitungsvorrichtung 8 miteinander verbunden. Die Aufbereitungsvorrichtung 8 ist eine externe Rechnereinheit, die dazu eingerichtet ist, Daten des optischen 3D-Messsystems für den Roboter aufzubereiten, sie also in eine für die Robotersteuerung verwendbare Form zu bringen.

Das optische 3D-Messsystem 20 erstellt im dargestellten Beispiel ein virtuelles Bild, das einen Oberflächenabschnitt des Bauteils 30 mit einer Nut 31 und einen Teil des Werkzeugelements 11 erfasst; das virtuelle Bild wird in der Figur auf einem Bildschirm 24 bildlich dargestellt wird; diese Darstellung umfasst die Elemente 30' und 11' für Bauteil bzw. Werkzeugelement.

Mittels einer Transformationsvorschrift kann eine Mehrzahl von Punktkoordinaten des virtuellen Bildes in Punktkoordinaten des Roboterkoordinatensystems (13) umgerechnet werden; im gezeigten Beispiel wurden alle Punkte des virtuellen Bildes entsprechend umgerechnet, und ein resultierendes Bild wurde auf einem Bildschirm des Roboters bildlich dargestellt.

Anhand der in sein eigenes Koordinatensystem umgerechneten Punktkoordinaten und anhand der durch die Aufbereitungsvorrichtung 8 geeignet aufbereiteten Daten kann der Roboter nunmehr das Werkzeugelement 11 geeignet so steuern, dass es eine vorgesehene Operation am Bauteil 30 durchführt.

Am Bauteil bzw. Werkzeugelement sind jeweils eine Mehrzahl von Orientierungspunkten M₁, M₂, M₃, R angeordnet; der Orientierungspunkt R stimmt dabei im vorliegenden Beispiel mit einem eingemessenen Referenzpunkt überein und ist durch eine Ecke an einer Werkzeugspitze immanent gegeben. Die anderen Orientierungspunkte sind im gezeigten Beispiel jeweils aufgebracht worden. Bei einem Umpositionieren von Bauteil oder Roboter, oder bei einem Positionieren eines anderen Bauteils kann das optische 3D-Messsystem sich anhand der jeweiligen Orientierungspunkte orientieren und so einem danach erfasstes virtuelles Bild ebenfalls das 3D-Messkoordinatensystem zugrunde legen. Daher kann die Transformationsvorschrift zum Umrechnen von 3D-Messkoordinaten in Roboterkoordinaten unverändert bleiben.

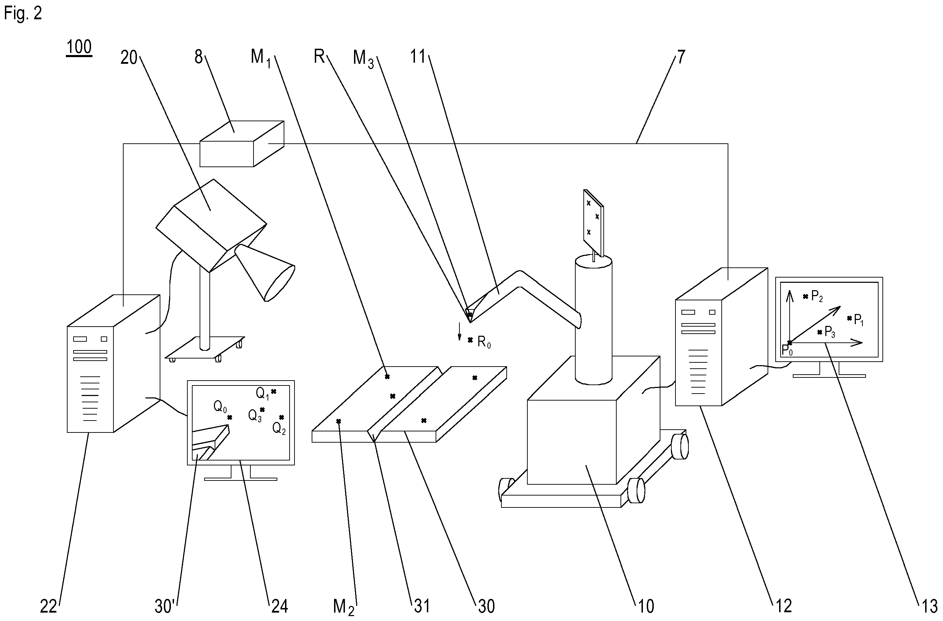

In Figur 2 ist die Anlage 100 in einer Situation gezeigt, in der die Transformationsvorschrift bestimmt wird.

Eine Mehrzahl von Raumpunkten umfasst im dargestellten Beispiel drei Raumpunkte R₁, R₂ und R₃, die jeweils an einer Oberfläche des Roboters 10 angeordnet sind. Die jeweiligen Roboterkoordinaten der Raumpunkte R₁, R₂ und R₃ sind vorzugsweise in einem Datenspeicher abgelegt und der Rechnereinheit 12 zugänglich.

Darüber hinaus umfasst die Mehrzahl einen Raumpunkt R₀; dessen Roboterkoordinaten können beispielsweise ausgewählt worden sein.

In der Figur sind die Punkte P₀, P₁, P₂, P₃, die sich aus den zu den Raumpunkten gehörigen Roboterkoordinaten ergeben, zur Illustration in das zugehörige Roboterkoordinatensystem 13 eingezeichnet.

Das optische 3D-Messsystem 20 erfasst die Raumpunkte R₀, R₁, R₂ und R₃ und bestimmt ihre Koordinaten bezüglich des eigenen, 3D-Messkoordinatensystems; so erstellt es ein virtuelles Bild zur Kalibrierung, das in der Darstellung auf einem Bildschirm 24 angezeigt ist; zur Orientierung bzw. Ausrichtung kann das 3D-Messkoordinatensystem insbesondere einen miterfassten Teil des Bauteils 30 verwenden, der zur Illustration als Element 30' auf dem Bildschirm 24 des 3D-Messystems 20 dargestellt ist. Für den Raumpunkt R₀ (der als abstrakte Roboterkoordinaten ausgewählt wurde und somit zunächst keine physische Repräsentation hat, so also auch nicht von dem optischen 3D-Messsystem erfasst werden kann) wird ein Referenzpunkt R am Werkzeugelement 11 durch die Robotersteuerung an dem Punkt R₀ positioniert; dies ist durch den entsprechenden Pfeil verdeutlicht. Vermöge eines Erfassens des Referenzpunktes R am Raumpunkt R₀ kann das optische 3D-Messsystem (bzw. die zugehörige Rechnereinheit 22) die Positionskoordinaten auch des Punktes R₀ bezüglich des 3D-Messkoordinatensystems bestimmen. In der Figur 2 sind die sich aus den Positionskoordinaten im 3D-Messkoordinatensystem ergebenden Punkte Q₀, Q₁, Q₂ und Q₃ zur Illustration in das Koordinatensystem 23 eingezeichnet.

Nach einer entsprechenden Übermittlung der jeweiligen Positionskoordinaten bezüglich der unterschiedlichen Koordinatensysteme (des Roboters und des optischen 3D-Messsystems) kann eine der Rechnereinheiten 12, 22 oder können beide zusammen (und/oder die Aufbereitungsvorrichtung 8 und/oder eine weitere, nicht dargestellte Rechnereinheit) eine Transformationsvorschrift bestimmen, mit der die Positionskoordinaten bezüglich des 3D-Messkoordinatensystems auf Positionskoordinaten der Raumpunkte bezüglich des Roboterkoordinatensystems abgebildet werden; eine Referenzierung an einem fixen Punkt im Raum oder eine bestimmte Ausrichtung der Komponenten der Anlage ist hierfür nicht erforderlich.

### Bezugseichen

- 7: Kommunikationsverbindung
- 8: Aufbereitungsvorrichtung
- 10: Roboter
- 11: Werkzeugelement
- 12: Rechnereinheit des Roboters
- 13: Roboterkoordinatensystem

- 20: optisches 3D-Messsystem
- 22: Rechnereinheit des optischen 3D-Messsystems
- 23, 23': 3D-Messkoordinatensystem
- 24: Bildschirm

- 30, 30': Bauteil
- 31, 31': Nut

- 100: Anlage

- M₁, M₂, M₃: Orientierungspunkt
- R: Referenzpunkt; zugleich Orientierungspunkt
- R₀: Raumpunkt
- R₁, R₂, R₃: Raumpunkte;
- P₀, P₁, P₂, P₃: zu den Raumpunkten gehörige Roboterkoordinaten
- Q₀, Q₁, Q₂, Q₃: zu den Raumpunkten gehörige 3D-Messkoordinaten

## Patentansprüche

1. Verfahren zur Steuerung einer Operation eines Roboters (10) im Flugzeugbau, das umfasst:
ein Erstellen mindestens eines virtuellen Bildes mit einem optischen 3D-Messsystem (20) und in Bezug auf ein Koordinatensystem (23) des optischen 3D-Messsystems, im Folgenden als 3D-Messkoordinatensystem bezeichnet, wobei das mindestens eine virtuelle Bild einen Oberflächenbereich eines Flugzeugbauteils (30) erfasst;
ein Umrechnen einer Mehrzahl von Punktkoordinaten des virtuellen Bildes in Punktkoordinaten bezüglich eines Roboterkoordinatensystems (13) mit Hilfe einer Transformationsvorschrift; und
ein Steuern eines Werkzeugelements (11) des Roboters (10) anhand der Punktkoordinaten bezüglich des Roboterkoordinatensystems zum Durchführen der Operation;
wobei die Mehrzahl von Punktkoordinaten des mindestens einen virtuellen Bildes mindestens einen Abschnitt einer Operationsbahn definiert, entlang welcher die Operation durch das Werkzeugelement (11) vorgesehen ist.

2. Verfahren gemäß Anspruch 1, das zudem ein Bestimmen von Durchführungsparametern für die Operation anhand der Mehrzahl von Punktkoordinaten bezüglich des 3D-Messkoordinatensystems (23) und/oder bezüglich des Roboterkoordinatensystems (13) umfasst.

3. Verfahren gemäß Anspruch 1 oder 2, wobei das Durchführen der Operation durch Erstellen mindestens eines zusätzlichen virtuellen Bildes mit dem optischen 3D-Messsystem (20) überwacht und/oder geregelt wird.

4. Verfahren gemäß einem der vorhergehenden Ansprüche, das umfasst:
ein Bestimmen von Positionskoordinaten einer Mehrzahl an Raumpunkten (R₀, R₁, R₂, R₃) bezüglich des 3D-Messkoordinatensystems (23); und
ein Bestimmen der Transformationsvorschrift, mit der die Positionskoordinaten bezüglich des 3D-Messkoordinatensystems (23) auf Positionskoordinaten der Raumpunkte bezüglich des Roboterkoordinatensystems (13) abgebildet werden.

5. Verfahren gemäß Anspruch 4, wobei das mindestens eine virtuelle Bild ein virtuelles Bild zur Operationsdurchführung ist, und wobei das Bestimmen der Positionskoordinaten bezüglich des 3D-Messkoordinatensystems umfasst:
ein Festlegen der Positionskoordinaten bezüglich des Roboterkoordinatensystems für mindestens einen der Raumpunkte (R₀);
ein Positionieren eines Referenzpunktes (R) eines beweglichen Roboterelements (11) des Roboters (10) an dem mindestens einen Raumpunkt; und
ein Erstellen eines virtuellen Bildes zur Kalibrierung mit dem optischen 3D-Messsystem (20), wobei das virtuelle Bild zur Kalibrierung mindestens einen Teil des Flugzeugbauteils und den Referenzpunkt an dem mindestens einen Raumpunkt in Koordinaten bezüglich des 3D-Messkoordinatensystems erfasst.

6. Verfahren gemäß Anspruch 5, das zudem ein Einmessen des am beweglichen Roboterelement befindlichen Referenzpunktes (R) auf das Roboterkoordinatensystem (13) umfasst.

7. Verfahren gemäß einem der vorhergehenden Ansprüche, wobei das virtuelle Bild das Werkzeugelement (11) in einer gegebenen Werkzeugelementstellung sowie mit einer Mehrzahl an am Werkzeugelement angeordneten Orientierungspunkten (R, M3) erfasst, und wobei das Verfahren ferner umfasst:
ein Umpositionieren des Flugzeugbauteils (30) und/oder ein Platzieren eines anderen Bauteils in einem Erfassungsbereich des optischen 3D-Messsystems (20); und
ein Erstellen eines weiteren virtuellen Bildes in Bezug auf das 3D-Messkoordinatensystem (23), wobei das weitere virtuelle Bild einen Oberflächenbereich des umpositionierten oder anderen Bauteils und die Mehrzahl an Orientierungspunkten am in der gegebenen Werkzeugelementstellung befindlichen Werkzeugelement bezüglich des 3D-Messkoordinatensystems erfasst.

8. Verfahren gemäß Anspruch 7, das ferner umfasst:
ein Umrechnen einer Mehrzahl von Punktkoordinaten des weiteren virtuellen Bildes in Punktkoordinaten bezüglich des Roboterkoordinatensystems (13) mit der Transformationsvorschrift;
ein Steuern des Roboters anhand der Punktkoordinaten bezüglich des Roboterkoordinatensystems zum Durchführen einer weiteren Operation.

9. Verfahren gemäß einem der vorhergehenden Ansprüche, wobei das virtuelle Bild das Flugzeugbauteil (30) in einer gegebenen Bauteilstellung sowie das Werkzeugelement mit einer Mehrzahl an daran angeordneter Orientierungspunkten (R, M3) erfasst, und wobei das Verfahren ferner umfasst:
ein Umpositionieren des Roboters (10); und
ein Erstellen eines weiteren virtuellen Bildes in Bezug auf das 3D-Messkoordinatensystem, wobei das weitere virtuelle Bild den Oberflächenbereich und/oder einen weiteren Oberflächenbereich des in der gegebenen Bauteilstellung befindlichen Flugzeugbauteils (30) sowie die Mehrzahl an am Werkzeugelement des umpositionierten Roboters (10) angeordneten Orientierungspunkten erfasst.

10. Verfahren gemäß Anspruch 9, das ferner umfasst:
ein Umrechnen einer Mehrzahl von Punktkoordinaten des weiteren virtuellen Bildes in Punktkoordinaten bezüglich des Roboterkoordinatensystems (13) mit Hilfe der Transformationsvorschrift;
ein Steuern des umpositionierten Roboters (10) anhand der Punktkoordinaten bezüglich des Roboterkoordinatensystems zum Durchführen einer weiteren Operation.

11. Verfahren gemäß einem der Ansprüche 1 bis 10, wobei die vorgesehene Operation die Füllung einer Nut (31) des Flugzeugbauteils (30) mit Füllmaterial umfasst.

12. Ein oder mehrere computerlesbare Speichermedien mit Instruktionen, die, wenn sie von einem Computer ausgeführt werden, der in eine Anlage (100) mit einem Roboter (10) und einem damit in Kommunikationsverbindung stehenden optischen 3D-Messsystem (23) integriert oder mit einer derartigen Anlage verbunden ist, eine Durchführung eines Verfahrens gemäß einem der Ansprüche 1 bis 11 bewirken oder ermöglichen.

13. Anlage (100) zum automatischen Durchführen von Operationen, wobei die Anlage ein optisches 3D-Messsystem (20) und einen Roboter (10) mit mindestens einem mittels einer Robotersteuerung steuerbaren Werkzeugelement (11) umfasst, wobei der Robotersteuerung ein Roboterkoordinatensystem (13) zugrunde liegt, und wobei die Anlage dazu eingerichtet ist, ein Verfahren gemäß einem der Ansprüche 1 bis 11 auszuführen.

## Claims

1. Method of controlling an operation of a robot (10) in aircraft construction, comprising:
creating at least one virtual image with a 3D measurement optical system (20) and with respect to a coordinate system (23) of the 3D measurement optical system, hereinafter referred to as the 3D measurement coordinate system, the at least one virtual image capturing a surface area of an aircraft component (30); converting a plurality of point coordinates of the virtual image into point coordinates with respect to a robot coordinate system (13) by means of a transformation rule; and
controlling a tool element (11) of the robot (10) based on the point coordinates with respect to the robot coordinate system to perform the operation;
wherein the plurality of point coordinates of the at least one virtual image defines at least a portion of an operation path along which the operation is provided by the tool element (11).

2. Method according to claim 1, further comprising determining performance parameters for the operation from the plurality of point coordinates with respect to the 3D measurement coordinate system (23) and/or with respect to the robot coordinate system (13).

3. Method according to claim 1 or 2, wherein the performance of the operation is monitored and/or controlled by creating at least one additional virtual image with the optical 3D measuring system (20).

4. Method according to one of the preceding claims, comprising: determining position coordinates of a plurality of spatial points (R₀, R₁, R₂, R₃) with respect to the 3D measuring coordinate system (23); and determining the transformation rule by which the position coordinates with respect to the 3D measuring coordinate system (23) are mapped to position coordinates of the spatial points with respect to the robot coordinate system (13).

5. Method according to claim 4, wherein the at least one virtual image is a virtual image for performing an operation, and wherein determining the position coordinates with respect to the 3D measuring coordinate system comprises: determining the position coordinates with respect to the robot coordinate system for at least one of the space points (R₀); positioning a reference point (R) of a movable robot element (11) of the robot (10) at the at least one spatial point; and creating a virtual image for calibration with the 3D measurement optical system (20), the virtual image for calibration capturing at least a portion of the aircraft component and the reference point at the at least one spatial point in coordinates with respect to the 3D measurement coordinate system.

6. Method according to claim 5, which further comprises calibrating the reference point (R) located on the movable robot element to the robot coordinate system (13).

7. Method according to any of the foregoing claims, wherein the virtual image captures the tool element (11) in a given tool element position and with a plurality of reference points (R, M3) located on the tool element, and wherein the method further comprises:
repositioning the aircraft component (30) and/or placing another component in a detection area of the 3D measurement optical system (20); and forming a further virtual image with respect to the 3D measurement coordinate system (23), the further virtual image detecting a surface area of the repositioned or other component and the plurality of orientation points on the tool element in the given tool element position with respect to the 3D measurement coordinate system.

8. Method according to claim 7, which further comprises:
converting a plurality of point coordinates of the further virtual image into point coordinates with respect to the robot coordinate system (13) using the transformation rule;
controlling the robot using the point coordinates with respect to the robot coordinate system to perform a further operation.

9. Method according to any of the foregoing claims, wherein the virtual image captures the aircraft component (30) in a given component position and the tool element having a plurality of orientation points (R, M3) disposed thereon, and wherein the method further comprises:
repositioning the robot (10); and
creating a further virtual image with respect to the 3D measuring coordinate system, the further virtual image capturing the surface area and/or a further surface area of the aircraft component (30) located in the given component position and the plurality of orientation points arranged on the tool element of the repositioned robot (10).

10. Method according to claim 9, which further comprises
converting a plurality of point coordinates of the further virtual image into Point coordinates with respect to the robot coordinate system (13) using the transformation rule;
controlling the repositioned robot (10) based on the point coordinates with respect to the robot coordinate system to perform a further operation.

11. Method according to any one of claims 1 to 10, wherein the intended operation comprises filling a groove (31) of the aircraft component (30) with filling material.

12. One or more computer-readable storage media containing instructions which, when executed by a computer integrated in or connected to a system (100) comprising a robot (10) and a 3D optical measuring system (23) in communication therewith, cause or enable a method according to one of claims 1 to 11 to be performed.

13. Installation (100) for automatically performing operations, wherein the installation comprises a 3D optical measuring system (20) and a robot (10) with at least one tool element (11) controllable by means of a robot controller, wherein the robot controller is based on a robot coordinate system (13), and wherein the installation is adapted to perform a method according to one of claims 1 to 11.

## Revendications

1. Méthode de contrôle du fonctionnement d'un robot (10) dans la construction aéronautique, comprenant :
la création d'au moins une image virtuelle avec un système optique de mesure 3D (20) et par rapport à un système de coordonnées (23) du système optique de mesure 3D, ci-après dénommé système de coordonnées de mesure 3D, l'au moins une image virtuelle saisissant une surface d'un composant d'aéronef (30); la conversion d'une pluralité de coordonnées de points de l'image virtuelle en coordonnées de points par rapport à un système de coordonnées de robot (13) au moyen d'une règle de transformation; et
commander un élément d'outil (11) du robot (10) en fonction des coordonnées du point par rapport au système de coordonnées du robot pour effectuer l'opération;
dans laquelle la pluralité de coordonnées de points de l'image virtuelle au nombre d'au moins une définit au moins une partie d'un chemin d'opération le long duquel l'opération est fournie par l'élément outil (11).

2. Méthode selon la revendication 1, comprenant en outre la détermination de paramètres de performance pour le fonctionnement à partir de la pluralité de coordonnées de points par rapport au système de coordonnées de mesure 3D (23) et/ou par rapport au système de coordonnées du robot (13).

3. Méthode selon la revendication 1 ou 2, dans laquelle la performance de l'opération est surveillée et/ou contrôlée en créant au moins une image virtuelle supplémentaire avec le système de mesure optique 3D (20).

4. Méthode selon l'une des revendications précédentes, comprenant: la détermination des coordonnées de position d'une pluralité de points spatiaux (R₀, R₁, R₂, R₃) par rapport au système de coordonnées de mesure 3D (23); et la détermination de la règle de transformation par laquelle les coordonnées de position par rapport au système de coordonnées de mesure 3D (23) sont mappées en coordonnées de position des points spatiaux par rapport au système de coordonnées du robot (13).

5. Méthode selon la revendication 4, dans lequel la au moins une image virtuelle est une image virtuelle pour effectuer une opération, et dans lequel la détermination des coordonnées de position par rapport au système de coordonnées de mesure 3D comprend:
la détermination des coordonnées de position par rapport au système de coordonnées du robot pour au moins un des points de l'espace (R₀);
le positionnement d'un point de référence (R) d'un élément de robot mobile (11) du robot (10) au niveau d'au moins un point spatial; et la création d'une image virtuelle pour l'étalonnage avec le système optique de mesure 3D (20), l'image virtuelle pour l'étalonnage capturant au moins une partie de l'élément d'aéronef et le point de référence au niveau d'au moins un point spatial en coordonnées par rapport au système de coordonnées de mesure 3D.

6. Méthode selon la revendication 5, qui comprend en outre l'étalonnage du point de référence (R) situé sur l'élément mobile du robot par rapport au système de coordonnées du robot (13).

7. Méthode selon l'une quelconque des revendications précédentes, dans laquelle l'image virtuelle capture l'élément d'outil (11) dans une position d'élément d'outil donnée et avec une pluralité de points de référence (R, M3) situés sur l'élément d'outil, et dans laquelle la méthode comprend en outre
repositionnement de l'élément d'aéronef (30) et/ou placement d'un autre élément dans une zone de détection du système optique de mesure 3D (20); et formation d'une autre image virtuelle par rapport au système de coordonnées de mesure 3D (23), l'autre image virtuelle détectant une zone de surface de l'élément repositionné ou autre et la pluralité de points d'orientation sur l'élément d'outil dans la position donnée de l'élément d'outil par rapport au système de coordonnées de mesure 3D.

8. Méthode selon la revendication 7, qui comprend en outre:
la conversion d'une pluralité de coordonnées de points de l'image virtuelle supplémentaire en coordonnées de points par rapport au système de coordonnées du robot (13) en utilisant la règle de transformation;
contrôler le robot en utilisant les coordonnées des points par rapport au système de coordonnées du robot pour effectuer une autre opération.

9. Méthode selon l'une quelconque des revendications précédentes, dans lequel l'image virtuelle capture le composant d'aéronef (30) dans une position de composant donnée et l'élément d'outil ayant une pluralité de points d'orientation (R, M3) disposés sur celui-ci, et dans lequel le procédé comprend en outre
le repositionnement du robot (10); et
créer une autre image virtuelle par rapport au système de coordonnées de mesure 3D, l'autre image virtuelle capturant la surface et/ou une autre surface de l'élément d'aéronef (30) situé dans la position donnée de l'élément et la pluralité de points d'orientation disposés sur l'élément d'outil du robot repositionné (10).

10. Méthode selon la revendication 9, qui comprend en outre
la conversion d'une pluralité de coordonnées de points de l'image virtuelle supplémentaire en Coordonnées de points par rapport au système de coordonnées du robot (13) en utilisant la règle de transformation;
commander le robot repositionné (10) en fonction des coordonnées du point par rapport au système de coordonnées du robot pour effectuer une autre opération.

11. Méthode selon l'une quelconque des revendications 1 à 10, dans laquelle l'opération prévue consiste à remplir une rainure (31) de l'élément d'aéronef (30) avec un matériau de remplissage.

12. Un ou plusieurs supports de stockage lisibles par ordinateur contenant des instructions qui, lorsqu'elles sont exécutées par un ordinateur intégré dans ou connecté à un système (100) comprenant un robot (10) et un système de mesure optique 3D (23) en communication avec celui-ci, provoquent ou permettent l'exécution d'une méthode selon l'une des revendications 1 à 11.

13. Installation (100) pour l'exécution automatique d'opérations, dans laquelle l'installation comprend un système de mesure optique 3D (20) et un robot (10) avec au moins un élément d'outil (11) pouvant être commandé au moyen d'un contrôleur de robot, dans laquelle le contrôleur de robot est basé sur un système de coordonnées de robot (13), et dans laquelle l'installation est adaptée pour exécuter une méthode selon l'une des revendications 1 à 11.
